Europäisches Patentamt

(19) European Patent Office

Office européen des brevets

(11) Numéro de publication: **0 155 218**
**B1**

(12) **FASCICULE DE BREVET EUROPÉEN**

(45) Date de publication du fascicule du brevet:
07.02.90

(21) Numéro de dépôt: 85400498.3

(22) Date de dépôt: 14.03.85

(51) Int. Cl. ⁵: **H 02 P 7/622, C 03 B 33/10**

(54) Traceuse à servo-commande impulsionnelle, notamment pour le travail des volumes de verres.

(30) Priorité: 14.03.84 DE 3409299
14.03.84 DE 3409300

(43) Date de publication de la demande:
18.09.85 Bulletin 85/38

(45) Mention de la délivrance du brevet:
07.02.90 Bulletin 90/06

(84) Etats contractants désignés:
AT BE CH DE FR GB IT LI LU NL SE

(56) Documents cité:
EP-A-0 075 023
DD-A-53 786
DE-B-2 731 230
FR-A-2 367 710
GB-A-2 056 710
US-A-3 962 613

Industrie elektrik + Elektronik 20. Jahrgang (1975) N 3 H.G. Sener et al. "Wechselstromsteller mit Zwangslöschung", pages 25-28 Commande électronique des moteurs à courant alternatif R. Champrade et al. ed. EYROLLES (1980) Paris

Le dossier contient des informations techniques présentées postérieurement au dépôt de la demande et ne figurant pas dans le présent fascicule.

(73) Titulaire: SAINT-GOBAIN VITRAGE INTERNATIONAL
18, avenue d'Alsace
F-92400 Courbevoie (FR)
(84) Etats contractants désignés: BE CH FR GB IT LI LU NL SE

Titulaire: VEGLA Vereinigte Glaswerke GmbH
Viktoriaallee 3-5
D-5100 Aachen (DE)
(84) Etats contractants désignés: DE AT

(72) Inventeur: Reinmold, Heinz-Josef
Schervierstrasse 6
D-5100 Aachen (DE)
Inventeur: Mucha, Horst
Severinstrasse 22
D-5100 Aachen (DE)

(74) Mandataire: Eudes, Marcel
Saint-Gobain Recherche 39 Quai Lucien Lefranc
F-93304 Aubervilliers Cedex (FR)

LIBERGRAF, STOCKHOLM 1990

## Description

L'invention a trait aux machines traceuses, notamment à des machines opérant en coordonnées cartésiennes, et plus précisément au déplacement de leurs organes mobiles le long de l'un au moins de leurs axes de coordonnées. Elle les dote d'un dispositif d'entraînement simple, qui peut être piloté avec une bonne précision et à vitesse élevée sans que ses pièces soient soumises à aucune usure mécanique altérant sa qualité. Ce dispositif convient tout particulièrement à un emploi sur des machines exigeant une régulation de sensibilité élevée et de temps de réponse extrêmement brefs, telles que les machines traceuses à commande numérique à chariot en croisillon destinées au travail de volumes de verre, notamment pour leur découpe ou le meulage de leurs bords.

Pour déplacer les chariots ces machines utilisent normalement des moteurs électriques rotatifs: des organes de transmission classiques, dont la démultiplication permet d'augmenter la force motrice et la finesse de déplacement convertissent leur mouvement de rotation en mouvement linéaire, le long de tout axe de coordonnées. Une version avantageuse, décrite par la publication de brevet FR-A-2 367 710 emploie un chariot monté à l'intersection de deux arbres entraînés à partir de moteurs fixes par des courroies dentées. Un microprocesseur y pilote le mouvement du chariot à partir d'une mémoire contenant un programme de déplacement, en liaison avec un servo-régulateur qu'alimentent des répétiteurs des valeurs effectives de position et de vitesse; celui-ci commande la durée d'excitation des moteurs par l'intermédiaire d'un amplificateur possédant un étage final à transistors de puissance ou à thyristors.

Toutefois, l'usure plus ou moins rapide à laquelle les organes mécaniques sont soumis affecte leur précision. En outre, lorsqu'on veut pouvoir faire travailler l'outil à des vitesses élevées, atteignant voire dépassant 60 m/min, les forces d'inertie correspondantes engendrent des contraintes mécaniques élevées qui nuisent aussi à la précision et à la durée de vie des mécanismes.

D'autre part des moteurs linéaires triphasés avaient déjà été employés; en particulier des moteurs asynchrones avaient déjà servi dans l'industrie du verre mais pour effectuer des coupes rectilignes et non des tracés curvilignes programmés exigeant immobilisations et retours en arrière, notamment parce que, faute de démultiplication, ils ont particulièrement tendance à donner des à-coups aux très basses vitesses et que les solutions connues ne se prêtaient pas à une commande fine.

Pour entraîner les chariots traceurs de telles machines, l'invention recourt cependant à l'emploi de moteurs linéaires asynchrones triphasés, mais commandés sur quatre quadrants par modulation en durées d'impulsions d'une alimentation alternative sinusoïdale, méthode qui s'est révélée efficace pour obtenir les qualités désirées.

A cette fin l'invention emploie en particulier un circuit de servo-commande agissant sur deux phases au moins de l'alimentation sinusoïdale par l'intermédiaire d'un amplificateur possédant un étage final à transistors de puissance; ce circuit est avantageusement muni d'un limiteur de tensions induites comprenant un transistor de commutation alimenté, en parallèle sur les enroulements de l'inducteur, par un pont redresseur et commandé par le modulateur, court-circuitant ainsi ces enroulements pendant les coupures séparant les impulsions de courant: leurs courants d'auto-induction circulent alors en circuit fermé, maintenant à peu près le champ magnétique du moteur et réduisant fortement, a contrario, les pointes de tension induites ainsi que leurs conséquences, particulièrement nuisibles, sous l'effet du signal cadencé permanent que crée le modulateur, lorsqu'on veut opérer en hachant l'alimentation en impulsions de largeur ou de durée variables.

L'invention propose ainsi une machine à commande numérique exempte des inconvénients précités, dont un moteur au moins est un moteur linéaire asynchrone triphasé piloté comme précisé plus haut et, spécialement pour le travail de volumes de verre, notamment pour leur découpe ou le polissage de leurs bords, une machine traceuse en coordonnées cartésiennes dont le chariot est monté en croix suivant les directions d'axes de coordonnées, à l'intersection d'arbres mobiles par l'intermédiaire de coulisseaux munis chacun d'un inducteur, sur des couples de rails porteurs disposés respectivement sur chaque côté de son plan de travail.

Des formes d'exécution et des variantes avantageuses ressortiront de la description ci-dessous d'un exemple préféré, faite en référence aux dessins. Ceux-ci montrent:

- figure 1: le schéma de régulation,
- figure 2: le schéma d'une machine de découpe du verre à commande programmée,
- figure 3: le schéma par blocs du circuit de régulation de l'un de ses moteurs linéaires.

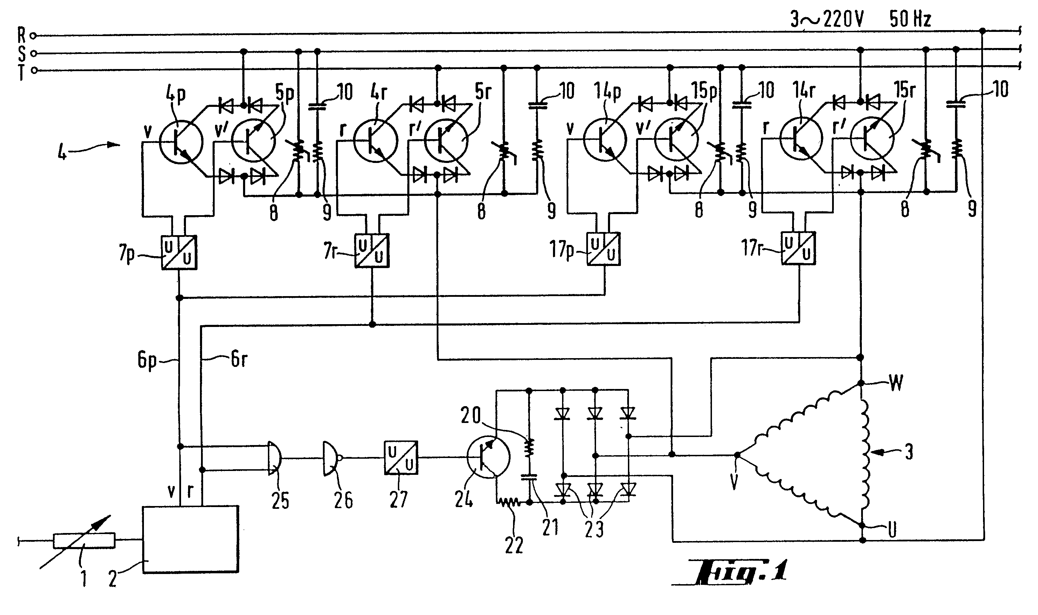

Le schéma de la figure 1 est, à titre d'exemple, celui d'un moteur asynchrone triphasé branché en triangle.

La valeur de consigne désirée est envoyée par un générateur de valeurs de consigne 1 à un modulateur d'impulsions en durées 2 qui règle à travers un étage de puissance l'alimentation de l'enroulement 3 du moteur.

Le générateur de valeurs de consigne peut être muni d'une entrée de valeurs réelles et délivrer par conséquent au modulateur 2 un signal corrigé. Naturellement, il peut aussi obéir à une mémoire programmée: une telle commande convient par exemple en tant que système de positionnement pour les applications les plus diverses. Etant donné que l'on peut utiliser à cet effet des dispositifs de commande et de régulation connus, la présente description se limite à détailler la construction de l'étage de puissance.

A une cadence prédéterminée correspondant par exemple à 1 kHz, le modulateur 2 délivre de façon connue à l'amplificateur de puissance un signal modulé en valeurs discrètes ou impulsions dont la largeur ou la durée sont fonctions des valeurs instantanées de la grandeur de consigne prédéterminées par le générateur 1. Il agit ainsi sur le rapport courant/coupure de la tension triphasée d'alimentation.

L'amplificateur de puissance comporte un étage final à semi-conducteurs, transistors de puissance ou thyristors interrupteurs "GTO". Dans le circuit représenté la régulation n'agit que sur les raccordements V et W, étant donné que pour commander un moteur à courant triphasé, il suffit d'en régler deux phases; chacun est réglé par quart et l'étage final représenté de l'amplificateur comprend deux paires de transistors, repérées l'une p, l'autre r selon le sens de rotation.

Le point de raccordement U de l'enroulement du moteur est donc alimenté en permanence; le point de raccordement V est commandé par les transistors 4p et 5p sur la phase S, 4r et 5r sur la phase T, le point W de façon inverse, par les transistors 14p et 15p, 14r et 15r:

Pour un sens de rotation p (en avant) du moteur, les impulsions de courant sont envoyées du modulateur 2 à l'amplificateur de puissance par l'intermédiaire de la ligne 6p et parviennent aux transistors 4p et 5p à travers l'organe séparateur 7p, aux transistors 14p et 15p à travers l'organe séparateur 17p; le point V est donc alimenté par la phase S, le point W par la phase T. Les transistors 4p et 14p traitent l'alternance positive de la sinusoïde, les transistors 5p et 15p son alternance négative.

Pour le sens de rotation opposé r (en arrière), les signaux, transmis par la ligne 6r, parviennent aux transistors 4r et 5r par l'intermédiaire du séparateur 7r, aux transistors 14r et 15r par celui du séparateur 17r: le raccordement est donc inverse; ce sont les transistors 4r et 14r qui traitent l'alternance positive et les transistors 5r et 15r l'alternance négative.

A la cadence prédéterminée de 1 kHz, les transistors intéressés se bloquent ou sont passants au rythme du rapport courant/coupure fixé par le modulateur 2; ils commandent ou règlent donc dans le sens voulu l'alimentation en courant de l'enroulement 3.

Une varistance 8, résistance dont la valeur est fonction de la tension, et un circuit RC constitué d'une résistance 9 et d'un condensateur 10 sont disposés en parallèle sur chacune des paires de transistors pour effacer les pointes de tension qui pourraient les endommager.

Un étage supplémentaire est prévu pour limiter les pointes de tension induites par la commande cadencée permanente de l'amplificateur de puissance et qui perturbent les transistors de commutation. Cet étage comprend un circuit RC constitué par la résistance 20, le condensateur 21 et une résistance de charge 22 ainsi que les redresseurs associés 23, enfin un transistor de commutation 24. La base de ce transistor est reliée logiquement au modulateur d'impulsions 2 par l'intermédiaire du circuit OU 25 et du circuit NON 26; un séparateur 27 est intercalé entre ce dernier et le transistor 24. Cette commande rend le transistor 24 conducteur lorsque les huit transistors de commutation de phases sont bloqués, c'est-à-dire pendant les coupures entre impulsions de courant; aussi, sous l'effet de l'auto-induction de 1 'enroulement, le champ magnétique du moteur est-il à peu près conservé pendant ces coupures. Ce montage permet à la régulation de se comporter sensiblement comme une régulation d'amplitude.

L'utilisation d'un tel circuit de commande présuppose celle de moteurs asynchrones dont le rotor possède une résistance accrue, notamment pour les moteurs asynchrones à rotor en court-circuit; il existe des moteurs linéaires asynchrones à secondaire de résistance élevée, de sorte que le circuit conforme à l'invention permet aussi de manière très avantageuse d'asservir de tels moteurs linéaires et d'en équiper des machines traceuses.

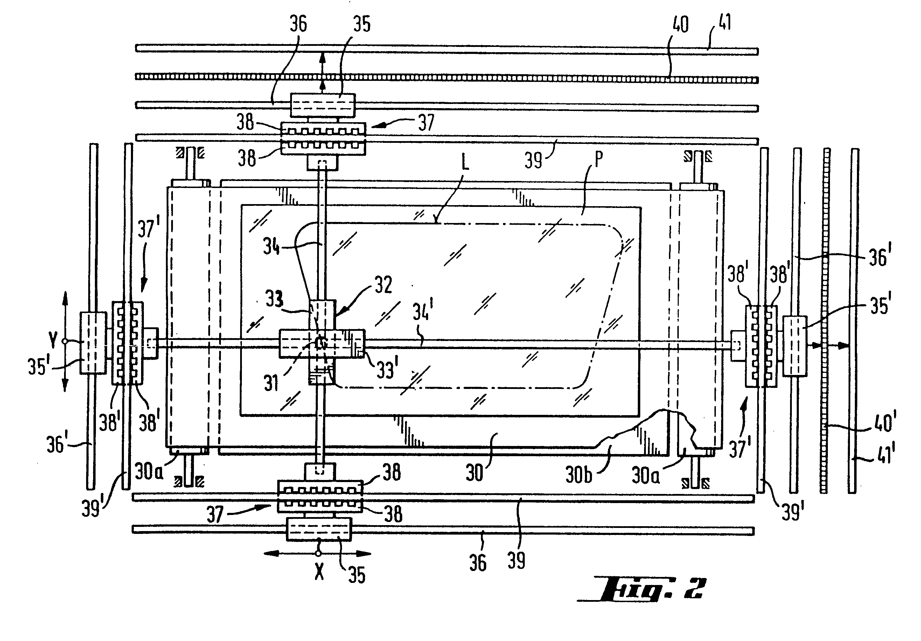

La constitution mécanique et les éléments les plus importants du mécanisme d'entraînement de l'outil sont schématisés sur la figure 2, en référence à la découpe de volumes de verre sur des primitifs à l'intérieur d'une chaîne de fabrication.

Reçu d'un convoyeur horizontal non représenté par une bande transporteuse sans fin 30 qu'entraînent des rouleaux 30a et dont une table plane 30b supporte le brin supérieur, le primitif P, reposant sur cette bande, est immobilisé à l'aide de moyens connus non représentés.

La ligne de découpe L y est tracée selon le programme mémorisé, à l'aide d'un outil de découpe 31 monté sur un chariot en croisillon 32. Celui-ci est constitué de l'assemblage de deux boîtiers superposés 33 et 33', le premier coulissant par l'intermédiaire de coussinets à circulation de billes sur l'arbre 34 suivant la direction de coordonnées signalée par la double flèche Y, le second coulissant de même sur l'arbre 34' suivant la direction de coordonnées signalée par la double flèche X. A ses extrémités l'arbre 34, le long duquel le chariot 32 se déplace suivant la direction Y mais qui fixe simultanément sa position suivant la direction X est monté sur des coulisseaux 35 circulant de part et d'autre du plan de travail, le long de rails porteurs 36, par l'intermédiaire d'autres coussinets à circulation de billes.

Son entraînement et l'immobilisation suivant la direction X sont effectués par deux moteurs linéaires jumelés dont chaque primaire comprend un inducteur triphasé 37. Chacun de ces inducteurs, montés respectivement sur le côté de chacun des coulisseaux 35, possède deux noyaux 38 en forme de peignes dirigés l'un vers l'autre; dans leurs rainures sont placés ses enroulements entre lesquels passe le secondaire, constitué par un rail fixe 39 formé d'un métal électriquement bon conducteur tel que le cuivre.

Pour les déplacements suivant l'axe des X, le système de traçage comprend en outre, pour servir de répétiteur de la valeur effective de la position, un générateur d'impulsions binaires 40 disposé le long de la voie correspondante et, pour déterminer la valeur effective de la vitesse, un potentiomètre linéaire 41 disposé parallèlement à ce générateur.

La construction de l'arbre 34' donc l'entraînement du chariot 32 suivant la direction Y sont analogues et les organes correspondants sont munis sur la figure de repères homologues affectés d'indices "prime".

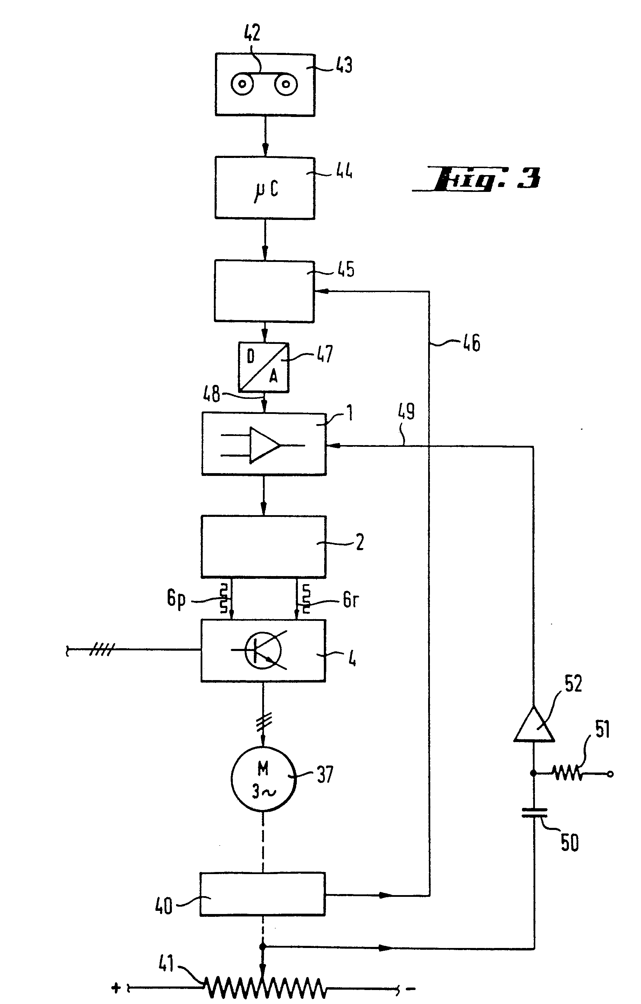

Le fonctionnement de l'ensemble du système de traçage sera explicité, pour l'un des axes, en référence à la figure 3; la commande relative à l'autre axe possède une constitution identique.

Le programme de déplacement correspondant au tracé désiré est mémorisé sur une bande magnétique 42 et un enrouleur de cassettes 43 l'introduit dans la mémoire de travail du microprocesseur 44.

A partir de ce microprocesseur, les ordres de déplacement parviennent sous la forme de valeurs de consigne dans le compteur différentiel progressif-régressif 45 qui, par l'intermédiaire de la ligne 46, reçoit en outre les impulsions de déplacement effectivement émises par le générateur 40 répétiteur de position, impulsions rectangulaires déphasées de 90 ° de manière à permettre d'identifier déplacement avant et déplacement arrière. Le compteur 45 élabore ainsi par différence un signal d'écart que le convertisseur numérique-analogique 47, branché en aval, convertit en une tension de consigne analogique.

Cette tension est envoyée par l'intermédiaire de la ligne 48 au servo-régulateur 1, qui reçoit parallèlement, par l'intermédiaire de la ligne 49, une tension représentative de la vitesse effective de déplacement: cette dernière est élaborée par le circuit différentiateur constitué de la capacité 50, de la résistance 51 et de l'amplificateur opérationnel 52 qui traduit la variation dans le temps de la tension prélevée sur le potentiomètre linéaire 41.

On peut ainsi obtenir le signal requis pour la régulation du déplacement sans recourir à une machine tachymétrique rotative qui exigerait à nouveau un convertisseur mécanique entre mouvement linéaire et mouvement de rotation. Le répétiteur tachymétrique décrit présente aussi par rapport à d'autres types de répétiteurs, utilisant par exemple un générateur linéaire numérique en aval duquel serait branché un convertisseur fréquence/tension, l'avantage que la valeur effective de la tension délivrée est absolument exempte d'harmoniques ce qui est extrêmement avantageux, en particulier aux faibles vitesses de déplacement.

Le servo-régulateur 1, comparant la valeur de consigne et la valeur réelle, commande comme il a été dit le modulateur d'impulsions en durée 2 qui découpe alors les valeurs instantanées de sa tension modulée continue en valeurs discrètes, par exemple à la cadence de 1 kHz et, agissant sur l'amplificateur de puissance 4, par l'intermédiaire de la ligne 6p pour les mouvements d'avance du chariot et de la ligne 6r pour ses mouvements de recul, règle en fonction de cette tension de consigne la largeur des impulsions de la tension triphasée d'alimentation reçue de cet amplificateur par les inducteurs 37 du moteur linéaire.

Le régulateur décrit permet de construire une traceuse à moteur linéaire possédant une sensibilité et une vitesse de régulation élevées.

## Revendications

1. Machine traceuse, équipée sur au moins l'un des axes de coordonnées d'un chariot dont le mécanisme d'entraînement comprend au moins un moteur linéaire triphasé (37) piloté à partir d'une mémoire de données (43) contenant un programme de déplacement, par un microprocesseur (44) associé à un servo-régulateur (1), caractérisée en ce que ce moteur est un moteur asynchrone dont le servo-régulateur (1), travaillant par modulation en durées d'impulsions, module sur quatre quadrants l'alimentation (R, S, T) du primaire en courant sinusoïdal.

2. Machine selon la revendication 1, caractérisée en ce que le modulateur d'impulsions (2) agit sur deux phases au moins de l'alimentation sinusoïdale par l'intermédiaire d'un amplificateur (4) possédant un étage final à transistors de puissance.

3. Machine selon la revendication 2, caractérisée en ce que le circuit de régulation est muni d'un limiteur de tensions induites comprenant un transistor de commutation (24) alimenté, en parallèle sur les enroulements (3) de l'inducteur (37), par un pont redresseur (23) et commandé par le modulateur, qui le rend conducteur pendant les coupures entre impulsions de courant.

4. Machine selon la revendication 3, caractérisée en ce que le transistor de commutation est associé à un circuit RC (20, 21) et une résistance de charge (22).

5. Machine selon la revendication 4, caractérisée en ce que le modulateur (2) commande le transistor de commutation par l'intermédiaire d'un circuit OU (25), d'un circuit NON (26) et d'un étage séparateur (27).

6. Machine selon l'une des revendications 1 à 5, caractérisée en ce que le servo-régulateur module à fréquence fixe son alimentation par le réseau.

7. Machine selon l'une des revendications 1 à 6, caractérisée en ce que le servo-régulateur est alimenté par un répétiteur de position (40) constitué d'un générateur digital linéaire comportant une identification marche avant-marche arrière.

8. Machine selon la revendication 7, caractérisée en ce que le servo-régulateur est en outre alimenté par un répétiteur de vitesse constitué d'un potentiomètre linéaire (41) dont la tension de sortie alimente un circuit différentiateur électronique (50, 51, 52).

9. Machine selon la revendication 7, caractérisée en ce que le servo-régulateur est en outre alimenté par un répétiteur de vitesse constitué d'un générateur linéaire d'impulsions attaquant un transducteur fréquence-tension.

10. Machine selon l'une des revendications 1 à 9, caractérisée en ce que les inducteurs (37) du primaire des moteurs linéaires font partie des organes mobiles d'entraînement du chariot (32), chacun possédant deux noyaux (38) en forme de peignes dirigés l'un vers l'autre, entre lesquels passe un rail conducteur (39) constituant le secondaire correspondant.

11. Machine traceuse en coordonnées cartésiennes selon l'une des revendications 1 à 10, caractérisée en ce que le chariot (32) est monté en croix suivant les directions d'axes de coordonnées, à l'intersection d'arbres (34, 34') mobiles sur des couples de rails porteurs (36, 36') disposés respectivement sur chaque côté de son plan de travail, par l'intermédiaire de coulisseaux (35, 35') munis chacun d'un inducteur (37, 37') associé à un rail conducteur (39, 39').

12. Machine selon la revendication 11, caractérisée en ce qu'elle 15 est dessinée pour la découpe du verre.

**Patentansprüche**

1. Anreißmaschine, die für zumindest eine der Koordinatenachsen mit einem Schlitten ausgestattet ist, dessen Antriebsmechanismus zumindest einen Dreiphasen-Linearmotor (37) aufweist, der ausgehend von einem ein Bewegungsprogramm enthaltenden Datenspeicher (43) über einen Mikroprozessor (44) gesteuert wird, welcher einem Servoregler (1) zugeordnet ist, dadurch gekennzeichnet, daß der Motor ein Asynchronmotor ist, dessen mit Impulsbreitenmodulation arbeitender Servoregler (1) in vier Quadranten die Speisung des Primärelementes (R, S, T) mit sinusförmigem Strom moduliert.

2. Maschine nach Anspruch 1 dadurch gekennzeichnet, daß der Impulsbreitenmodulator (2) auf zumindest zwei Phasen des sinusförmigen Speisestromes über einen Verstärker (4) einwirkt, der eine Leistungstransistor-Endstufe aufweist.

3. Maschine nach Anspruch 2, dadurch gekennzeichnet, daß die Regelschaltung mit einem Begrenzer für Induktionsspannungen ausgestattet ist, der einen parallel zu den Wicklungen (3) des Induktors (37) über eine Gleichrichterbrücke (23) gespeisten und von dem Modulator gesteuerten Schalttransistor (24) aufweist, welcher ihn während Unterbrechungen der Stromimpulse leitend macht.

4. Maschine nach Anspruch 3, dadurch gekennzeichnet, daß dem Schalttransistor ein RC-Glied (29, 21) und ein Lastwiderstand (22) zugeordnet sind.

5. Maschine nach Anspruch 4, dadurch gekennzeichnet, daß der Modulator (2) den Schalttransistor über ein ODER-Glied (25), ein NICHT-Glied (26) und eine Trennstufe (27) ansteuert.

6. Maschine nach einem der Ansprüche 1 - 5, dadurch gekennzeichnet, daß der Servoregler den Speisestrom aus dem Netz mit vorgegebener Frequenz moduliert.

7. Maschine nach einem der Ansprüche 1 bis 6, dadurch gekennzeichnet, daß der Servoregler von einem Weg-Rückmeldegeber (40) gesteuert wird, der als Linear-Digital-Geber mit Vorwärts-Rückwärts-Erkennung ausgebildet ist.

8. Maschine nach Anspruch 7, dadurch gekennzeichnet, daß der Servoregler ferner von einem Geschwindigkeits-Geber gesteuert wird, der als Linearpotentiometer (41) ausgebildet ist, dessen Ausgangsspannung eine elektronische Differenzierschaltung (50, 51, 52) steuert.

9. Maschine nach Anspruch 7, dadurch gekennzeichnet, daß der Servoregler ferner von einem Geschwindigkeits-Geber gesteuert wird, der als linearer Impulsgenerator ausgebildet ist und einen Frequenz/Spannungs-Wandler beaufschlagt.

10. Maschine nach einem der Ansprüche 1 bis 5, dadurch gekennzeichnet, daß die Induktoren (37) des Primärelementes des Linearmotors einen Teil der beweglichen Antriebsorgane des Schlittens (32) bilden und je zwei Kerne (36) in Form von gegeneinander gerichteten Kämmen aufweisen, zwischen denen sich eine Leitungsschiene (35) erstreckt, welche das entsprechende Sekundärelement bildet.

11. Anreißmaschine mit kartesischen Koordinaten nach einem der Ansprüche 1 bis 10, dadurch gekennzeichnet, daß der Schlitten (32) kreuzförmig entsprechend den Richtungen der Koordinatenachsen im Schnittpunkt von Wellen (34, 34') montiert ist, die auf Paaren von Tragschienen (36, 36') bewegbar sind, welche auf jeder Seite der Arbeitsebene des Schlittens mittels eines Gleitstückes (35, 35') angeordnet sind, das je mit einem Induktor (37, 37') versehen ist, der einer Leitungsschiene (39, 39') zugeordnet ist.

12. Maschine nach Anspruch 11, dadurch gekennzeichnet, daß sie zum Schneiden von Glas bestimmt ist.

## Claims

1. Tracing machine, equipped on at least one of the coordinates axes with a carriage having a drive mechanism which comprises at least one three-phase linear motor (37), piloted from a data memory (43) containing a displacement programme, by a microprocessor (44) associated with a servo-controller (1), characterized in that this motor is an asynchronous motor, the servo-controller (1) of which, operating by pulse duration modulation, modulates on four quadrants the supply (R, S, T) to the primary circuit with sinusoidal current.

2. Machine according to claim 1, characterized in that the pulse modulator (2) acts on at least two phases of the sinusoidal supply through the intermediary of an amplifier (4) having a final stage comprising power transistors.

3. Machine according to claim 2, characterized in that the control circuit is equipped with an induced voltage limiter comprising a switching transistor (24) supplied, in parallel with the windings (3) of the inductor (37), by a rectifier bridge (23) and governed by the modulator, which makes it conducting during the breaks between current pulses.

4. Machine according to claim 3, characterized in that the switching transistor is associated with an RC circuit (20, 21) and a load resistor (22).

5. Machine according to claim 4, characterized in that the modulator (2) governs the switching transistor through the intermediary of an OR circuit (25), a NOT circuit (26) and a separator stage (27).

6. Machine according to one of claims 1 to 5, characterized in that the servo-controller modulates at fixed frequency its supply from the grid.

7. Machine according to one of claims 1 to 6, characterized in that the servo-controller is supplied from a position indicator (40), constituted of a linear digital generator comprising an identification of forward travel and backward travel.

8. Machine according to claim 7, characterized in that the servo-controller is supplied, in addition, from a velocity indicator, constituted of a linear potentiometer (41), the output voltage of which supplies an electronic differentiator circuit (50, 51, 52).

9. Machine according to claim 7, characterized in that the servo-controller is supplied, in addition, from a velocity indicator, constituted of a linear pulse generator acting on a frequency-voltage transducer.

10. Machine according to one of claims 1 to 9, characterized in that the inductors (37) of the primary circuit of the linear motors form part of linear drive devices of the carriage (32), each possessing two cores (38) of comb-shape, facing towards each other, between which a conductor rail (39) constituting the secondary circuit passes.

11. Tracing machine in cartesian coordinates according to one of claims 1 to 10, characterized in that the carriage (32) is mounted in cruciform manner along the directions of coordinates axes, at the intersection of shafts (34, 34') movable on pairs of carrier rails (36, 36'), disposed respectively on each side of its working plane, through the intermediary of sliders (35, 35') each equipped with an inductor (37, 37') associated with a conductor rail (39, 39').

12. Machine according to claim 11, characterized in that it is intended for cutting glass.

**Fig. 1**

EP 0 155 218 B1

**Fig. 2**

EP 0 155 218 B1

Fig. 3